# EUROPEAN PATENT SPECIFICATION

(11) **EP 2 818 347 B1**
(45) Date of publication and mention of the grant of the patent: **07.08.2019**
(21) Application number: 13173997.1
(22) Date of filing: 27.06.2013
(51) Int. Cl.: B60J 5/04

(54) **Connection arrangement for releasable connection of a first and a second portion of a side collision safety structure of a vehicle**
Verbindungsanordnung zum lösbaren Verbinden eines ersten und eines zweiten Teils einer Seitenaufprallsicherheitsstruktur eines Fahrzeugs
Système de connexion pour raccordement libérable d'une première et d'une seconde partie d'une structure de sécurité de collision latérale d'un véhicule

(43) Date of publication of application: 31.12.2014
(73) Proprietor: Volvo Car Corporation, 40 531 Göteborg (SE)
(72) Inventor: Lund, Kjell-Åke, 43538 Mölnlycke (SE); Svensson, Fredrik, 46139 Trollhättan (SE)
(74) Representative: Valea AB

(56) References cited:
- WO-A1-00/15454
- US-A- 3 887 227
- US-A- 5 431 476

## Description

### TECHNICAL FIELD

The present disclosure relates to a connection arrangement for releasable connection of a first and a second portion of a side collision safety structure of a vehicle.

### BACKGROUND

A vehicle may be involved in a side collision. The vehicle may be hit by another vehicle from the side and/or the vehicle may impact against a still-standing object, such as a pole or a barrier. In order to protect the users of the vehicle in such a side impact, it is well-known to use side impact bars in the doors of the vehicle.

Document JP11321499 A discloses a side surface collision shock absorbing structure for a car. The passenger compartment is enclosed by a number of side impact bars and wire ropes forming a ring. There are no details about how the different portions of the ring are connected.

Document US 5,137,325 discloses a side door structure for a vehicle, consisting of front and rear doors. The side door structure includes a front impact bar disposed in the front door, and extending in the back-and-forth direction of a vehicle body, and a rear impact bar which is disposed in the rear door to be inclined obliquely upward toward the rear portion of the vehicle body, and can be in contact with a rear portion of the front impact bar while being offset vertically when the rear door is moved forward.

Document US 5 431 476 A1 relates to a vehicle having first and second flexible members arranged within front and rear doors in the longitudinal direction relative to the vehicle. First ends of each of the flexible members are coupled together through a coupling member, which ensures coupling when the doors are closed. Respective other ends of the two flexible members are each coupled with respective lower portions of the vehicle body frame.

Document US 3 887 227 A1 relates to a safety structure of a vehicle for the protection against lateral impacts in which at least one tension member extending in the longitudinal direction is provided within the area of the passenger space which reinforces the lateral wall of the body and is adapted to convert the impact forces into tension forces.

### SUMMARY

The object of the present disclosure is to overcome or ameliorate at least one of the disadvantages of the prior art, or to provide a useful alternative.

It is desirable to provide a connection arrangement for releasable connection of a first and a second portion of a side collision safety structure of a vehicle which is less complicated than prior art solutions.

It is further desirable to provide a connection arrangement allowing the doors of the vehicle to be connected to each other by coupling of strong structural elements.

The object above may be achieved by the subject-matter of claim 1.

Thus, in a first aspect of the present disclosure there is provided a connection arrangement for releasable connection of a first and a second portion of a side collision safety structure of a vehicle, the first portion being located in a first door and the second portion being located in a second door, the second door being located rearwards of the first door in the vehicle. The connection arrangement comprises
- a first coupling member, adapted to be located at or adjacent to a rear edge of the first door attached, directly or indirectly, to the first portion of the safety structure,
- a hinge shaft, forming a rotation axis for opening of the second door,
- a body hinge member, having a first end adapted to be attached to a body of the vehicle and a second end adapted to receive the hinge shaft, and
- a second coupling member, adapted to be located at or adjacent to a front edge of the second door attached, directly or indirectly, to the second portion of the safety structure.
The second coupling member further is adapted to be attached to the hinge shaft, such that the second coupling member is able to rotate in relation to the body hinge member. The first and second coupling members are releasably connectable to each other, such that when the first and second coupling members are connected, a force in a longitudinal direction of the vehicle is transferable from one of the first and second coupling members to the other. The first and second coupling members are further releasable from each other by the rotation of the second coupling member.

The side collision structure is used to protect the users of the vehicle in case of a side impact.

The connection passes directly from door to door, via the hinge, i.e. not passing through a body of the vehicle, e.g. a B-pillar.

The direction "longitudinal" is defined in relation to the vehicle, i.e. in the normal driving direction of the vehicle. The longitudinal direction is thus substantially parallel to a side wall of the vehicle.

The first coupling member may be attached to the first portion of the safety structure by means of welding or by means of an attachment means such as a screw, bolt or rivet. The first coupling member may be directly attached to the first portion, i.e. without any intermediate element, or indirectly attached, i.e. via another element, such as a bracket.

The hinge shaft may be in the form of a separate hinge pin, allowing rotation relative to the body hinge member and/or the second door. The hinge pin may be inserted from above or from below into the hinge arrangement. In that case, the second coupling member is rotatably attached to the hinge shaft.

Alternatively, the hinge shaft may be fixedly attached to the body hinge member or forming a part of the body hinge member, with the second door being adapted to rotate around the hinge shaft. Also in that case, the second coupling member is rotatably attached to the hinge shaft.

As another alternative, the hinge shaft may be fixedly attached to a door hinge member of the second door or forming a part of door hinge member of the second door, such that the hinge shaft rotates together with the second door and the second coupling member in relation to the body hinge member, when opening the second door.

The body hinge member is attached to the body of the vehicle, e.g. to a B-pillar, if the first door is a front door and the second door is a rear door of a car. Purely as an example, the vehicle may comprise more than two doors at each side. The above-described arrangement for connection may then be used between the first and second doors, between the second and a third door, etc. The body hinge member may then be attached to a pillar between the doors, i.e. the C-pillar etc.

The second coupling member is attached to the hinge shaft, which is attached to the second door in such a way that rotation of the second coupling member around the rotation axis is allowed. The second coupling member is attached to the second portion of the safety structure via the hinge shaft. The second coupling member may be attached to the second portion of the safety structure via optional elements, such as the door hinge member located at or adjacent to the front edge of the second door, or an additional element in the second door. The attachment of the second coupling member allows it to rotate in relation to the body hinge member, such that the second door may be rotated to an open position. The optional elements may be attached to the second portion of the safety structure by means of welding or by means of an attachment means such as a screw, bolt or rivet. As an alternative, the optional elements may be comprised in the second portion of the safety structure, e.g. formed in one unit.

When the first door is being opened, it rotates around a hinge arrangement at its front edge. The first coupling member moves with the first door and is moved away from the second coupling member, thereby releasing the connection.

When the second door is being opened, it rotates around the above-mentioned rotation axis relative to the above-mentioned body hinge member. The second coupling member is rotated together with the second door out of the connection with the first coupling member, thereby releasing the connection.

When the first and second coupling members are connected, i.e. when the first and second doors are closed, the first and second coupling members form a longitudinal connection, i.e. a longitudinal force is transferable via the connection. The first and second coupling member may then be in direct mechanical connection with each other.

The connection between the first and second coupling members forms a connection, which is closed, when seen in the longitudinal direction, i.e. not allowing longitudinal movement of the first and second coupling members relative to each other, but open when seen in a transverse direction, allowing lateral and/or rotational movement of the first and second coupling members relative to each other. It is worth to be noted that during the above-mentioned rotational movements of the first and second door, respectively, the rotated coupling member will follow a rotational path having a tangent, which initially substantially coincides with the transverse direction of the vehicle. The transverse direction goes sideways in the vehicle, i.e. it is perpendicular to the longitudinal direction.

According to the present disclosure, the longitudinal force is transferable between the first and second doors via some of their strongest portions, i.e. at the hinge arrangement. It is further to be noted, that the longitudinal force is transferable directly from door to door, via the hinge arrangement, i.e. not passing the B-pillar. Further, the longitudinal force is transferred very close to the lateral edge of the vehicle. The plane of the force transfer is hence closer to the lateral edge of the vehicle as compared to known technology, where it for example is transferred via the B-pillar. Thereby, valuable time is saved in a side collision situation.

The above-described arrangement may be used for connecting a side collision safety structure as described below in the disclosure. However, it may also be used for connecting side impact bars.

One of the first and second coupling members may comprise a male member, e.g. a hook, and the other one of the first and second coupling members may comprise a female member, e.g. a catch, adapted to receive the male member. Alternatively, both of the first and second coupling members may comprise male members fitting into each other, e.g. two hooks being turned by 90 degrees in relation to each other. One of the first and second coupling members may comprise a protrusion adapted to fit into a corresponding receiving opening in the other coupling member.

The connection arrangement may comprise a plurality of the first and second coupling members, preferably in corresponding numbers. There may for example be a plurality of male members, each having its corresponding female member.

The body hinge member may form an upper body hinge member and the connection arrangement may further comprise a lower body hinge member, the hinge shaft extending between the upper body hinge member and the lower body hinge member, the second coupling member being rotatably attached to the hinge shaft between the upper body hinge member and the lower body hinge member. Alternatively, there may be two hinge shaft portions, one connecting the upper body hinge member and the second coupling member and another connecting the lower body hinge member and the second coupling member. If letting the coupling members extending between the lower and upper body hinge member, a wide connection is provided which is able to transfer high longitudinal forces.

The connection arrangement according to the invention may be wide in a z-direction, e.g. when comprising a plurality of coupling members, or since the coupling members themselves are wide. The z-direction is directed in a height dimension of the vehicle and is perpendicular to the longitudinal and the transverse direction. The connection arrangement may be at least 5 cm wide, preferably at least 10 cm, more preferably at least 20 cm and most preferably at least 30 cm wide. A practical upper limit is set by a height of an outer panel of the door in the vicinity of the connection arrangement. The width of the connection arrangement may further be adapted to the width of the corresponding portion of the side collision safety structure, having up to the same width as that portion of the side collision safety structure. The connection arrangement may thereby be adapted to transfer large longitudinal forces.

In a second aspect of the present disclosure there is provided a door of a vehicle, the door comprising a corresponding first or a second portion of a side collision safety structure of a vehicle, and a first or a second coupling member according to above, wherein the coupling member is directly, or indirectly, attached to the portion of the side collision safety structure.

The door may be the first door, e.g. a front door, comprising the first coupling member, described above, which is directly, or indirectly, attached to the first portion of the safety structure. Alternatively, the door may be the second door, e.g. the rear door, comprising the second coupling member described above, which is directly or indirectly attached to the second portion of the safety structure. If using such a portion of the safety structure, a side impact bar in the door as used in many of today's vehicle doors may be dispensed with, thereby saving weight.

The door may further comprise an additional coupling member for connection of the door to a door sill. Thereby the door comprises an additional connection to the vehicle body, which is useful in case a side impact occurs. The additional coupling member is configured such that it is releasable, making it possible to open the door in a normal way in order to allow entrance to the vehicle interior.

In a third aspect of the present disclosure there is provided a side collision safety structure of a vehicle comprising a first portion, a second portion and a connection arrangement according to above for releasable connection of the first portion and the second portion to each other,
the first portion being adapted to be located in a first door and the second portion being adapted to be located in a second door, the second door being located rearwards of the first door in the vehicle,
the first coupling member being adapted to be located at or adjacent to a rear edge of the first door attached, directly or indirectly, to the first portion of the safety structure, and the second coupling member being adapted to be located at or adjacent to a front edge of the second door attached, directly or indirectly, to the second portion of the safety structure.

The side collision safety structure is adapted to cooperate with a hinge shaft, forming a rotation axis for opening of the second door, and a body hinge member, having a first end adapted to be attached to a body of the vehicle and a second end adapted to receive the hinge shaft. The hinge shaft and/or the body hinge member may be comprised as parts in the side collision safety structure, or may be separate units. The second coupling member is adapted to be attached to the hinge shaft, such that the second coupling member is able to rotate in relation to the body hinge member. The first and second coupling members are releasably connectable to each other, such that when the first and second coupling members are connected, a force in a longitudinal direction of the vehicle is transferable from one of the first and second coupling members to the other. The first and second coupling members are further releasable from each other by the rotation of the second coupling member.

The side collision safety structure may have a width, which is greater than 20% of a height of the lowest of the first and second door, preferably greater than 30%, and most preferably greater than 50%, the height being measured from a lower edge of the door to a lower edge of the window in the z-direction. The collision safety structure is thus considerably wider than a conventional side impact bar.

The side collision safety structure may further include a hinge arrangement at a front edge of the first door, a locking latch at a rear edge of the second door and/or a rear door pillar connection. Thereby the first door is connectable to the vehicle body at the front end by the hinge arrangement and at the rear edge to the second door by the above-described arrangement for connection. Further, the second door may at its front edge be connectable to the first door by the above-described arrangement for connection and at its rear edge to the vehicle body by means of the locking latch and/or the rear door pillar connection.

The side collision safety structure may be adapted to extend along a side of the vehicle, preferably having an extension which is longer than the total longitudinal extension of the first and second doors. Thereby substantially the whole side of the passenger compartment is protected.

At least one portion of the first and second portions of the side collision safety structure may, at least partly, be formed by an outer panel of the first or second door. Thereby the side impact bar used in many of today's vehicle doors may be dispensed with, thereby saving weight.

The first and/or second portion of the side collision safety structure may comprise a membrane, a lattice or a framework. Such elements will contribute to the longitudinal strength of the side collision safety structure and yet not add to much weight.

It would also be feasible with a side collision safety structure comprising a first portion and a second portion as described above, but instead of the connection arrangement according to above for releasable connection of the first portion and the second portion to each other, it may comprise any other arrangement for releasable connection known from prior art.

The rear door pillar connection is intended to releasably connect the rear edge of the second door to the body of the vehicle, in particular to connect the second portion of the side collision safety structure to the body of the vehicle. If more than two doors are provided at either side of the vehicle, the rear door pillar connection may be used for the rearmost door. The rear door pillar connection may be wide, as seen in the z-direction. It may be adapted to transfer large longitudinal forces. The rear door pillar connection may be at least 5 cm wide, preferably at least 10 cm, more preferably at least 20 cm and most preferably at least 30 cm wide in the z-direction. A practical upper limit is set by a height of an outer panel of the door in the vicinity of the rear door pillar connection. The width of the rear door pillar connection may further be adapted to the width of the corresponding portion of the side collision safety structure, having up to the same width as that portion of the side collision safety structure.

The second door may comprise the above-described arrangement for connection at its front edge and/or the rear door pillar connection at its rear end. It is also feasible to use only one of these connections, exchanging the other one with a prior art releasable connection.

Further, the rear door pillar connection may also be used for connecting a conventional side impact bar to the body of the vehicle.

The rear door pillar connection may comprise a door member and a body member, which are adapted to fit into each other. The door member is, directly or indirectly, attached to the second portion of the side collision safety structure or forms a portion thereof. The body member is, directly or indirectly, attached to the body of the vehicle or forms a portion thereof.

Similar as for the above-described connection between the first and second coupling members, the rear door pillar connection is configured such that it allows transfer of a longitudinal force directly between the second portion of the side collision safety structure and the body of the vehicle, and yet allows the door member and the body member to be released from each other in order to open the second door.

The body member may comprise a protrusion, e.g. a flange adapted to fit into a corresponding recess or opening of the door member. It would further be feasible to use a female and a male member, or two male members, e.g. two hooks being turned by 90 degrees in relation to each other.

In a fourth aspect of the present disclosure there is provided a vehicle comprising a connection arrangement according to above and/or a door according to above and/or a side collision safety structure according to above and/or a rear door pillar connection according to above.

The first and second coupling members may be located less than 30 mm from a lateral edge of the vehicle, preferably less than 20 mm, more preferably 10 mm and most preferably less than 5 mm. This is for example appropriate for an embodiment using the outer panel as a portion of the side collision safety structure. The plane of the force transfer is hence closer to the lateral edge of the vehicle as compared to known technology, where it for example is transferred via the B-pillar. Thereby, valuable time is saved in a side collision situation.

The vehicle may comprise a side collision safety structure at either side of the vehicle, the side collision structures together with the vehicle body forming a safety cell body structure, which preferably surrounds the whole vehicle.

### BRIEF DESCRIPTION OF THE DRAWINGS

The present invention will hereinafter be further explained by means of non-limiting examples with reference to the appended drawings wherein:
- Fig. 1a: is a schematic view of a vehicle according to the invention comprising a side collision safety structure according to the invention,
- Fig. 1b: illustrates parts of the doors of one side of the vehicle of Fig. 1a,
- Fig. 1c: illustrates a first portion and a second portion of the side collision safety structure of Fig. 1a,
- Fig. 1d: illustrates the doors of Fig. 1b comprising the first portion and the second portion of the side collision safety structure of Fig. 1c,
- Fig. 1e: illustrates the vehicle of Fig. 1 with the doors removed for better visibility,
- Fig. 2: illustrates a connection arrangement for releasable connection of the first and second portions of the safety structure,
- Fig. 3: illustrates a prior art hinge arrangement,
- Fig. 4a: illustrates a hinge arrangement comprising the connection arrangement of Fig. 2 with the first and second doors closed,
- Fig. 4b: illustrates the hinge arrangement of Fig. 4a with the first door closed and the second door being opened,
- Fig. 4c: illustrates the hinge arrangement of Fig. 4a with the first door being opened and the second door closed,
- Fig. 5: illustrates another embodiment of the connection arrangement for releasable connection,
- Fig. 6: illustrates a rear door pillar connection, and
- Fig. 7: illustrates a cross-section of the rear door pillar connection of Figure 6.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

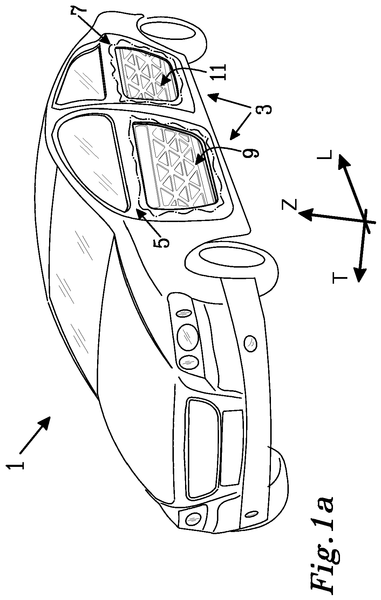

Figure 1a schematically illustrates a vehicle 1 according to the invention comprising a side collision safety structure 3 according to the invention. The vehicle 1 comprises a left front door 5 and a left rear door 7. The vehicle 1 further comprises a right front door and a right rear door, which cannot be seen in the illustrated perspective. The safety structure 3 comprises a first portion 9 located in the left front door 5 and a second portion 11 located in the left rear door 7. The right-hand side of the vehicle 1 comprises similar first and second portions of a similar safety structure. The direction "longitudinal" L is defined in relation to the vehicle 1, i.e. in the normal driving direction of the vehicle 1. The longitudinal direction L is thus substantially parallel to a side wall of the vehicle 1. The transverse direction T goes sideways in the vehicle, i.e. it is perpendicular to the longitudinal direction L. There is a further a height direction Z, which is perpendicular to the longitudinal direction L and the transverse direction T.

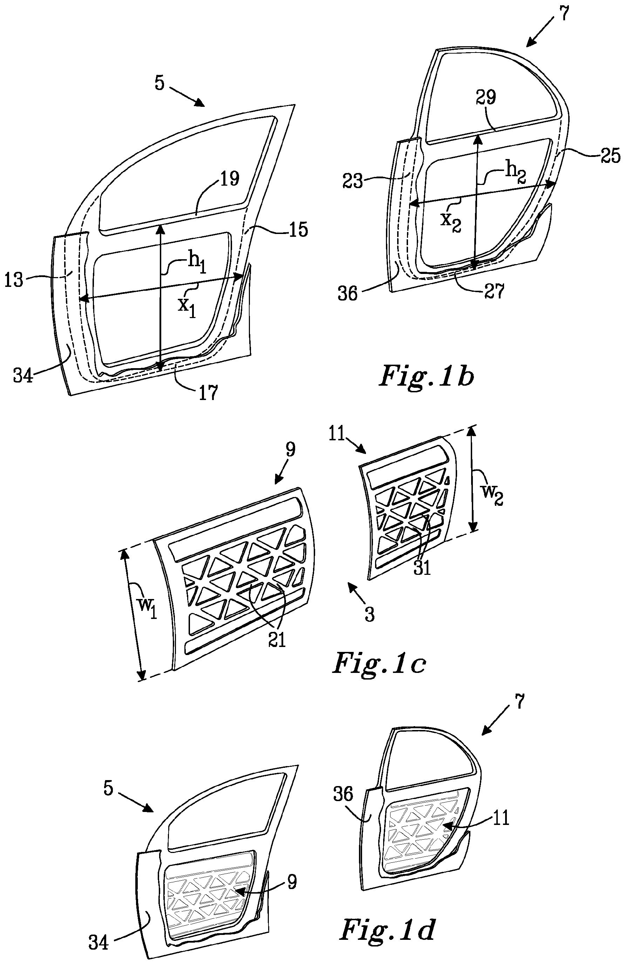

See Figures 1b and 1c for the measures and Figure 1d for an illustration of the doors 5, 7 comprising the first 9 and second 11 portions of the safety structure 3. The first portion 9 of the safety structure 3 extends from a front edge 13 of the front door 5 to a rear edge 15 of the front door 5. The first portion 9 has a width w₁ being substantially as large as the height h₁ of the front door 5, when determined from a lower edge 17 of the front door 5 to a lower edge 19 of the front window. The outer panel 34 of the front door 5 is partly removed for better visibility in Figures 1b and 1d. The first portion 9 comprises a first lattice 21, which extends over at least 20% of the height h₁ of the door 5, preferably at least 30% and most preferably at least 50%. It is desirable that the first lattice 21 at least covers the height, at which a user of the vehicle 1 would locate his/her hip when seated in a front seat of the vehicle 1. If using such a first portion 9 of the safety structure 3, a side impact bar in the front door 5, as used in many of today's vehicle doors, may be dispensed with, thereby saving weight.

In a similar way, the second portion 11 of the safety structure 3 extends from a front edge 23 of the rear door 7 to a rear edge 25 of the rear door 7. The second portion 11 has a width w₂ being substantially as large as the height h₂ of the rear door 7, when determined from the lower edge 27 of the rear door 7 to the lower edge 29 of the rear window. See Figures 1b, 1c and 1d. The outer panel 36 of the rear door 7 is partly removed for better visibility. The second portion 9 comprises a second lattice 31, which extends over at least 20% of the height h₂ of the door 7, preferably at least 30% and most preferably at least 50%. It is desirable that the second lattice 21 at least covers the height, at which a user of the vehicle 1 would locate his/her hip when seated in a rear seat. If using such a second portion 11, a side impact bar in the rear door 7, as used in many of today's vehicle doors, may be dispensed with, thereby saving weight.

In case a side impact would occur, the safety structure 3 will help to involve a larger area and/or more parts of the vehicle 1, besides where the impact actually occurs, thereby distributing the load. Local deformation is transformed into global deformation. The intrusion into the vehicle interior will be less as with conventional technology. As already mentioned above, if using the safety structure 3, one or more side impact bars, as used in many of today's vehicle doors, may be dispensed with, thereby saving weight.

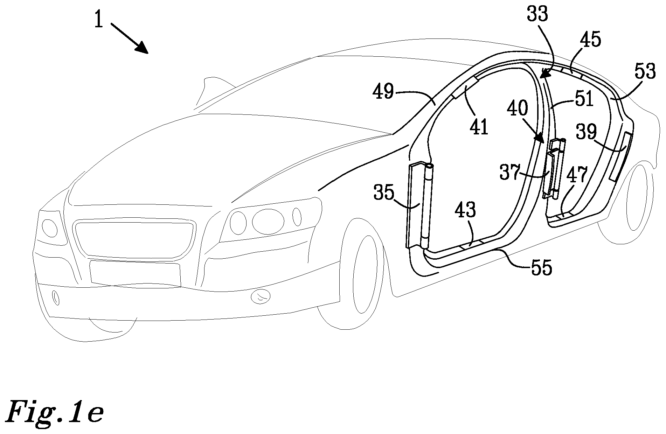

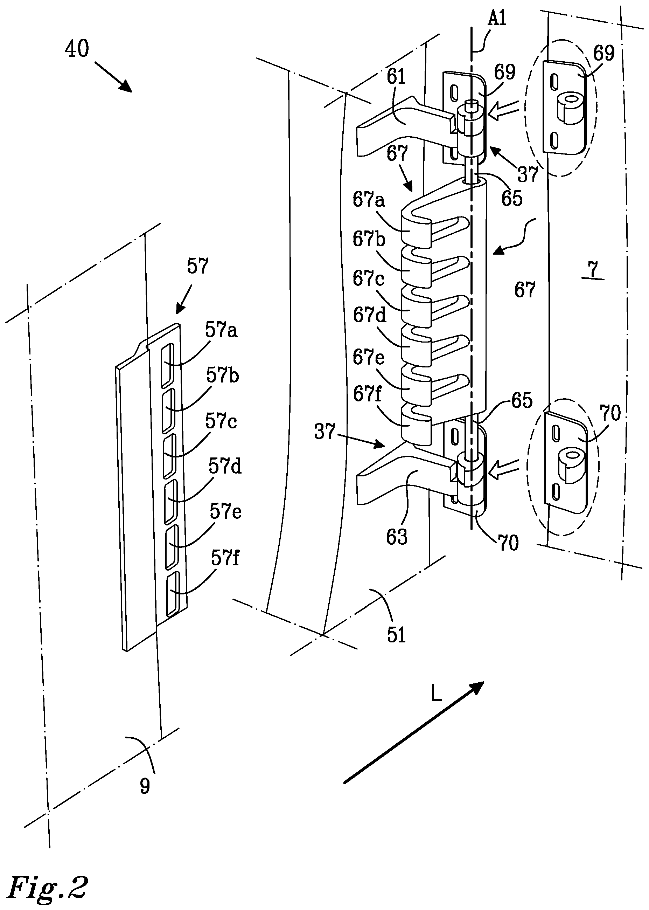

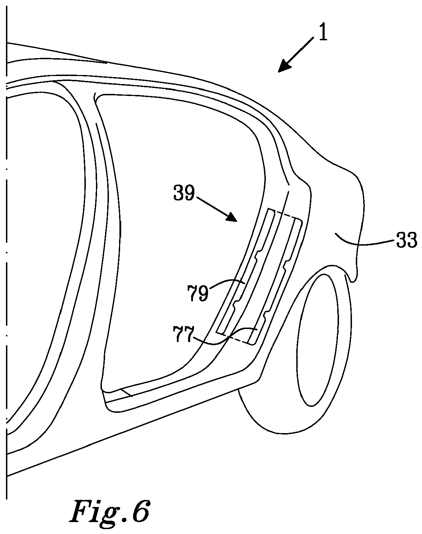

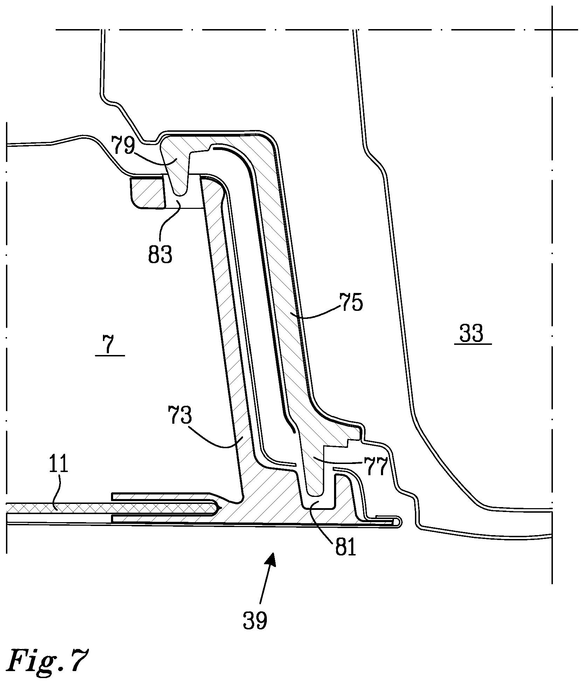

The doors 5, 7, and in particular the first portion 9 and the second portion 11 of the safety structure 3, are connected to a body 33 of the vehicle 1 by means of a front hinge arrangement 35, a rear door hinge arrangement 37 and a rear door pillar connection 39, and similar at the other side of the vehicle 1. See Figure 1e having the doors 5, 7 removed for better visibility. The rear door pillar connection 39 is further described below in conjunction with Figures 6 and 7. A connection arrangement 40 according to the invention for releasable connection of the first portion 9 and the second portion 11 of the side safety structure 3 is further described below in conjunction with Figures 2, 4a-c and 5. Additional connection arrangements 41, 43, 45, 47 may be used for connecting the doors 5, 7 to the vehicle body 33, e.g. to an A-pillar 49, a B-pillar 51, a C-pillar 53 or a door sill 55. There may be connection arrangements distributed around the whole door 5, 7, or at least around its lower half, in order to better connect the door 5, 7 to the vehicle body 33, in case a side impact occurs. The connection arrangements 40, 41, 43, 45, 47 are further configured such that they are releasable, making it possible to open the door 5, 7 in order to allow entrance to the vehicle interior.

In the illustrated embodiment, the safety structure 3 together with the vehicle body 33 form a safety cell body structure, which preferably surrounds the whole vehicle 1. In any case, it is desirable that the safety structure 3 at least extends longer than a width x₁, x₂ of the door 5, 7, such that the safety structure 3 can help transfer load of a side impact occurring at the door 5, 7 to the vehicle body 33. Preferably, the safety structure 3 has a longitudinal extension, which a longer than the total longitudinal extension x₁ + x₂ of the doors 5, 7. The first and second coupling members may be located less than 30 mm from a lateral edge of the vehicle, preferably less than 20 mm, more preferably less than 10 mm and most preferably less than 5 mm.

Instead of using lattices 21, 31, or as a complement, the door 5, 7 may comprise a membrane, not illustrated, forming part of the safety structure 3, which membrane may extend over at least 20% of the height h₁, h₂ of the door 5, 7, preferably at least 30% and most preferably at least 50%. The membrane may extend over substantially the whole area of the door 5, 7 below the window. It would also be feasible to, as an alternative, or as a complement, use an outer panel 34, 36 of the door 5, 7 as part of the safety structure 3.

Figure 2 illustrates a connection arrangement 40 for releasably connecting the front door 5 to the rear door 7, and in particular for releasably connecting the first portion 9 to the second portion 11 of the safety structure 3. The connection arrangement 40 comprises a first coupling member 57, illustrated as comprising a plurality of female members 57a-f, e.g. catches, adapted to be located at the rear edge 15 of the front door 5. The connection arrangement 40 further comprises a hinge arrangement 37 forming a rotation axis A1 for opening of the rear door 7. See also Figure 1b for reference numbers referring to the doors 5, 7 and Figure 1e for reference numbers referring to the vehicle 1. The hinge arrangement 37 comprises an upper body hinge member 61 and a lower body hinge member 63, adapted to be attached to the B-pillar 51. A hinge shaft 65 extends between the upper body hinge member 61 and the lower body hinge member 63. The hinge shaft 65 forms the rotation axis A1 for opening of the rear door 7. The connection arrangement 40 further comprises a second coupling member 67 adapted to be located at the front edge 23 of the rear door 7, comprising a plurality of male members 67a-f, e.g. hooks, which are adapted to fit into the corresponding female members 57a-f. The second coupling member 67 is rotatably attached around the hinge shaft 65, allowing rotation in order to open the rear door 7. The second door 7 comprises an upper door hinge member 69 and a lower door hinge member 70. Instead of having a through-going hinge shaft 65 as illustrated, there may be two hinge shaft portions, one connecting the upper body hinge member 61, the upper door hinge member 69 and an upper portion of the second coupling member 67, and another one connecting the lower body hinge member 63, the lower door hinge member 70 and a lower portion of the second coupling member 67.

The connection arrangement 40 may be at least 5 cm wide, preferably at least 10 cm, more preferably at least 20 cm and most preferably at least 30 cm wide, when seen in the z-direction.

When the rear door 7 is closed, the first and second coupling members 57, 67 are in a connected state, and the male members 67a-f grip into the corresponding female members 57a-f. Hence, it is possible to transfer a longitudinal force from one of the first and second coupling members 57, 67 to the other, i.e. from one of the first and second portions 9, 11 of the side collision safety structure to the other, or from one of the doors 5, 7 to the other.

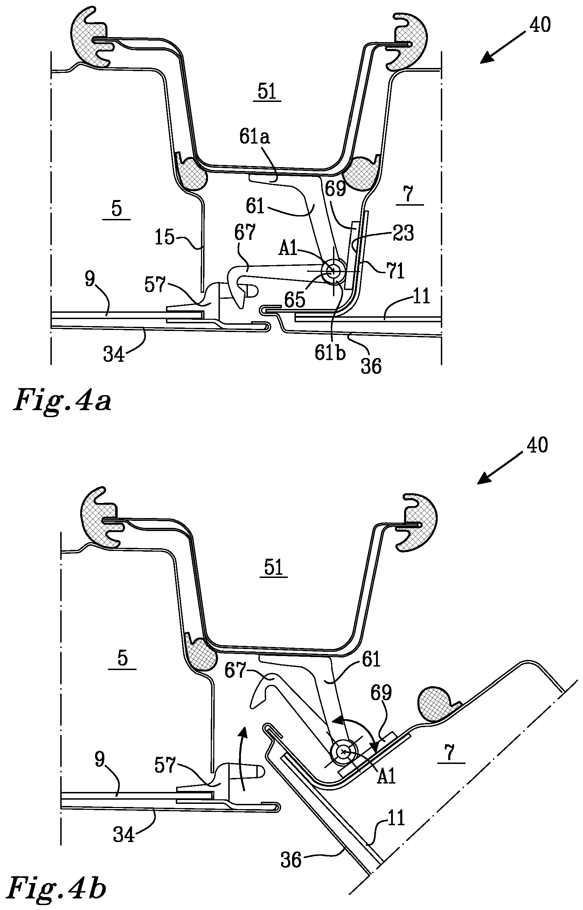

When the rear door 7 is being opened, the second coupling member 67 is released from the first coupling member 57, as the rear door 7 is rotated around the hinge shaft 65. This is described in more detail below in conjunction with Figure 4b.

Even if Figure 2 illustrates a plurality of male members and a plurality of female members providing a plurality of connections, it would be possible to use a connection arrangement 40 comprising only one connection male member with one corresponding female member. In that case, the hinge shaft 65 may be rather short. It could for example be a hinge pin rotatably attached to only one of the upper body hinge member 61 or the lower body hinge member 63. In an embodiment, two hinge pins may be used at either body hinge member 61, 63 with a connection arrangement according to the invention located at both the upper and lower hinge arrangement.

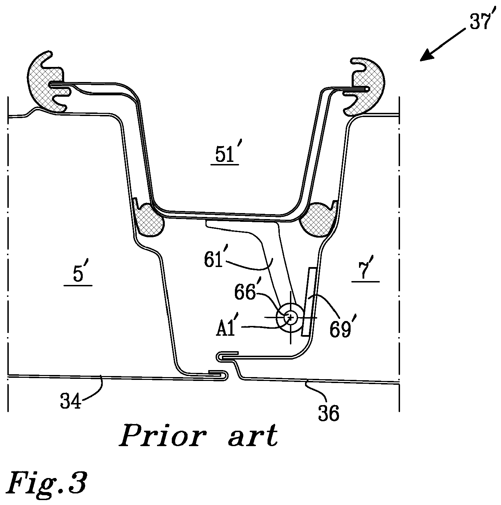

Figure 3 illustrates a detail of a prior art hinge arrangement showing an upper hinge arrangement. Reference numbers of the prior art embodiment are denoted by a '-sign in order to distinguish them from embodiments of the invention. Figure 3 shows a cross section through a front door 5', a B-pillar 51' and a rear door 7'. The rear door 7' is rotatably connected to the B-pillar 51' via an upper body hinge member 61'. The upper body hinge member 61' comprises a rotation axis A1'. The rear door 7 comprises an upper door hinge member 69'. An upper hinge pin 66' forms the rotation axis A1' and rotatably connects the door hinge member 69' to the upper body hinge member 61'. The upper hinge pin 66' allows rotation of the rear door 7' in order to open it. According to prior art, the rear door 7' often has also a lower hinge arrangement, which is arranged in a similar way comprising a lower body hinge member, a lower hinge pin and a lower door hinge member. Normally, each hinge arrangement comprises its own hinge pin.

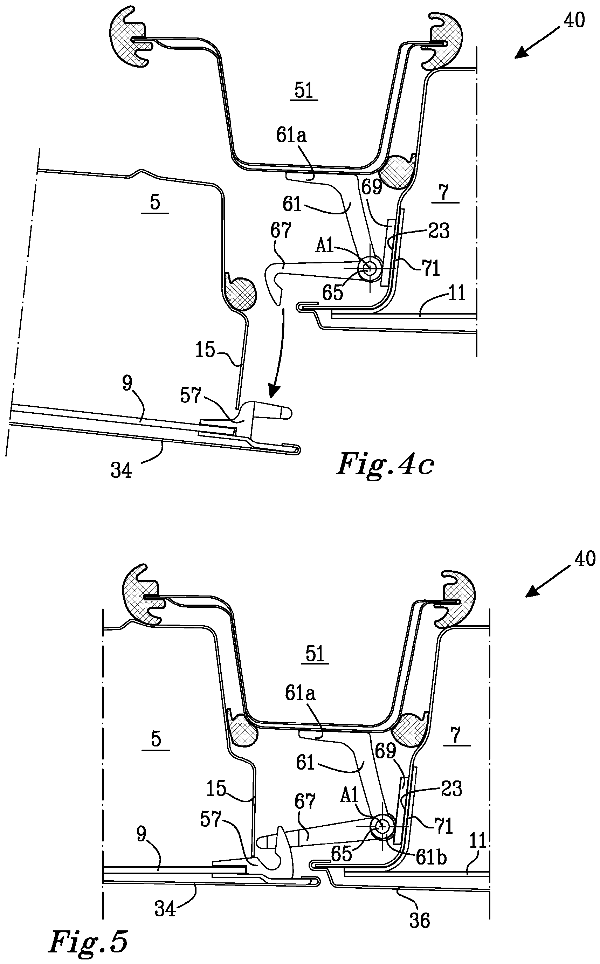

Figures 4a-c illustrate a cross-section of an embodiment of the connection arrangement according to the invention, e.g. the embodiment of Figure 2, with the doors 5, 7 closed, see Figure 4a, the rear door 7 being opened, see Figure 4b, and the front door 5 being opened, see Figure 4c.

The rear door 7 is rotatably connected to the B-pillar 51 via a first end 61 a of the body hinge member 61, here forming a bracket. The body hinge member 61 comprises a rotation axis A1 at a second end 61b. The first coupling member 57, comprising a female member, is located adjacent to the rear edge 15 of the front door 5. The first coupling member 57 is directly attached to the first portion 9 of the safety structure 3. Another portion of the safety structure 3, the second portion 11, is located in the rear door 7. An L-shaped door member 71 is attached to the second portion 11 of the safety structure 3 and to a door hinge member 69 located at the inside of the front edge 23 of the rear door 7. The hinge shaft 65 is rotatably attached to the door hinge member 69 and forms the rotation axis A1. The second coupling member 67, comprising a male member, is rotatably attached to the hinge shaft 65. The second coupling member 67 is thus indirectly attached to the second portion 11 of the safety structure 3, via the hinge shaft 65, the door hinge member 69 and the door member 71.

When both doors 5, 7 are closed, as seen in Figure 4a, the first and second coupling members 57, 67 are in a connected state. A longitudinal force transferred by the first portion 9 of the side collision safety structure 3 may then be further transferred by the first coupling member 57, the second coupling member 67, the door hinge member 69 and the door member 71 to the second portion 11, and vice versa. The longitudinal force is hence transferred between the doors 5, 7 via some of their strongest portions, i.e. at the hinge arrangement. It is further to be noted, that the longitudinal force is transferred directly from door to door, via the hinge, i.e. not passing the B-pillar 51. Further, the longitudinal force is transferred very close to the lateral edge of the vehicle 1. The plane of the force transfer is hence closer to the lateral edge of the vehicle 1 as compared to known technology, where the longitudinal force for example is transferred via the B-pillar. Thereby, valuable time is saved in a side collision situation.

When the rear door 7 is being opened, see Figure 4b, it rotates around the above-mentioned rotation axis A1 relative to the body hinge member 61. The second coupling member 67 is rotated together with the rear door 7 out of the connection with the first coupling member 57, thereby releasing the connection.

When the first door 5 is being opened, see Figure 4c, it rotates around the hinge arrangement 35 at its front edge 13, see Figure 1b for reference numbers of the front door 7. The first coupling member 57 then follows the movement of the front door 5 and is moved away from the second coupling member 67, thereby releasing the connection.

Figure 5 illustrates a cross-section of another the connection arrangement according to embodiment of the connection arrangement according to the invention. This embodiment is similar to that of Figures 4a-c, except for that the first coupling member 57 comprises a male member, or a plurality of male members, e.g. similar to the male members of Figure 2, and the second coupling member 67 comprises a female member, or a plurality of female members, e.g. similar to the female members of Figure 2.

It would also be feasible that both the first and second coupling members 57, 67 comprise one or more male members, which fit into each other, e.g. two hooks being turned by 90 degrees in relation to each other. As a further alternative to the hooks and catches illustrated in Figures 2, 4a-c and 5, not illustrated, one of the first and second coupling members 57, 67 may comprise a protrusion adapted to fit into a corresponding receiving opening in the other coupling member.

In general terms, the connection 40 between the first and second coupling members 57, 67 is configured such that it allows transfer of a longitudinal force directly between the first and second coupling members 57, 67, without passing any pillar of the vehicle, and yet allows the first and second coupling members 57, 67 to be released from each other in order to open the front door 5 and/or the rear door 7 without any further manipulation by the user of the vehicle.

Figures 6 and 7 illustrate a rear door pillar connection 39 of a side collision safety structure 3 of a vehicle 1 according to the invention. One portion of the rear door pillar connection 39 is located in the rear door 7 and the other portion in the body 33 of the vehicle 1. Figure 6 shows the portion located in the body 33 of the vehicle 1, and Figure 7 a cross-section of both portions.

The rear door pillar connection 39 comprises a door member 73 and a body member 75, which are adapted to fit into each other. The door member 73 is, directly or indirectly, attached to the second portion 11 of the side collision safety structure 3 or forms a portion thereof. The body member 75 comprises two protrusions, here in the form of flanges 77, 79, which are adapted to fit into a corresponding recess 81 and a corresponding opening 83 of the door member 73.

Similar as for the connection 40 between the first and second coupling members 57, 67, the rear door pillar connection 39 is configured such that it allows transfer of a longitudinal force directly between the second portion 11 of the side collision safety structure 3 and the body 33 of the vehicle 1, and yet allows the door member 73 and the body member 75 to be released from each other in order to open the rear door 7.

Even if the rear door pillar connection 39 illustrated in Figures 6 and 7 comprises two protrusions, in the form of flanges 77, 79, it would be enough with one. Alternatively, three or more flanges could be used. It would further be feasible to use a female and a male member, similar as for Figure 2 or 5, or two male members, e.g. two hooks being turned by 90 degrees in relation to each other.

The rear door pillar connection 40 may be at least 5 cm wide, preferably at least 10 cm, more preferably at least 20 cm and most preferably at least 30 cm wide, when seen in the z-direction.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Purely as an example, the vehicle may comprise more than two doors at each side. The above-described arrangement for connection may then be used between the first and second door and between the second and third door, etc.

## Claims

1. A connection arrangement (40) for releasable connection of a first (9) and a second portion (11) of a side collision safety structure (3) of a vehicle (1), said first portion (9) being located in a first door (5) and said second portion (11) being located in a second door (7), said second door (7) being located rearwards of said first door (5) in said vehicle (1),
said connection arrangement (40) comprising
- a first coupling member (57), adapted to be located at or adjacent to a rear edge (15) of said first door (5) attached, directly or indirectly, to said first portion (9) of said safety structure (3),
- a hinge shaft (65), forming a rotation axis (A1) for opening of said second door (7),
- a body hinge member (61, 63) having a first end (61a) adapted to be attached to a body (33) of said vehicle (1) and a second end (61b) adapted to receive said hinge shaft (65), and
- a second coupling member (67), adapted to be located at or adjacent to a front edge (23) of said second door (7) attached, directly or indirectly, to said second portion (11) of said safety structure (3), said second coupling member (67) further being adapted to be attached to said hinge shaft (65), such that said second coupling member (67) is able to rotate in relation to said body hinge member (61, 63),
said first and second coupling members (57, 67) being releasably connectable to each other, such that when said first and second coupling members (57, 67) are connected, a force in a longitudinal direction (L) of said vehicle (1) is transferable from one of said first and second coupling members (57, 67) to the other, said first and second coupling members (57, 67) further being releasable from each other by said rotation of said second coupling member (67),
**characterized by**
said second coupling member (67) being adapted to be attached to said second portion (11) of said safety structure (3) via said hinge shaft (65).

2. The connection arrangement (40) according to claim 1, wherein one of said first and second coupling members (57, 67) comprises a male member (67a-f) and the other one of said first and second coupling members (57, 67) comprises a female member (57a-f) adapted to receive said male member (67a-f).

3. The connection arrangement (40) according to claim 2, wherein one of said first and second coupling members (57, 67) comprises a plurality of male members (67a-f), and the other one of said first and second coupling members (57, 67) comprises a plurality of female members (57a-f), preferably in corresponding numbers.

4. The connection arrangement (40) according to any one of the preceding claims, wherein said body hinge member forms an upper body hinge member (61) and said connection arrangement (40) further comprises a lower body hinge member (63), said hinge shaft (65) extending between said upper body hinge member (61) and said lower body hinge member (63), said second coupling member (67) being rotatably attached to said hinge shaft (65) between said upper body hinge member (61) and said lower body hinge member (63).

5. A door (5, 7) of a vehicle (1), said door (5, 7) comprising a first (9) or a second portion (11) of a side collision safety structure (3), and a corresponding first (57) or a second coupling member (67) of the connection arrangement (40) according to any one of the preceding claims, said coupling member (57, 67) being directly or indirectly attached to said portion (9, 11) of said side collision safety structure (3).

6. The door (5, 7) according to claim 5 further comprising an additional coupling member (43) for connection of said door (5, 7) to a door sill (55).

7. A side collision safety structure (3) of a vehicle (1) comprising a first portion (9), a second portion (11) and a connection arrangement (40) according to any one of claims 1 to 4 for releasable connection of said first portion (9) and said second portion (11) to each other.

8. The side collision safety structure (3) according to claim 7, wherein said side collision safety structure (3) has a width (w₁, w₂), which is greater than 20% of a height (h₁, h₂) of the lowest of said first and second door (5, 7), preferably greater than 30%, and most preferably greater than 50%, said height (h₁, h₂) being measured from a lower edge (17, 27) of said door (5, 7) to a lower edge (19, 29) of the window.

9. The side collision safety structure (3) according to claim 7 or 8, wherein said side collision safety structure (3) further includes a hinge arrangement (35) at a front edge (13) of said first door (5), a locking latch (39) at a rear edge (25) of said second door (7) and/or a rear door pillar connection (39).

10. The side collision safety structure (3) according to any one of claims 7-9, wherein said side collision safety structure (3) is adapted to extend along a side of said vehicle (1), preferably having an extension which is longer than the total longitudinal extension (x₁+x₂) of said first and second doors (5, 7).

11. The side collision safety structure (3) according to any one of claims 7-10, wherein at least one portion of said first and second portions (9, 11) of said side collision safety structure (3) is, at least partly, formed by an outer panel (34, 36) of said first or second door (5, 7).

12. The side collision safety structure (3) according to any one of claims 7-11, wherein said first and/or second portion (9, 11) of said side collision safety structure (3) comprises a membrane, a lattice (21, 31) or a framework.

13. A vehicle (1) comprising a connection arrangement (40) according to any one of claims 1 to 4 and/or a door (5, 7) according to claim 5 or 6 and/or a side collision safety structure (3) according to any one of claims 7-12.

14. The vehicle (1) according to claim 13, wherein said first and second coupling members (57, 67) are located less than 30 mm from a lateral edge of said vehicle (1), preferably less than 20 mm, more preferably less than 10 mm and most preferably less than 5 mm.

15. The vehicle (1) according to claim 13 or 14, wherein said vehicle (1) comprises a side collision safety structure (3) at either side of said vehicle (1), said side collision structures (3) together with a body (33) of said vehicle (1) forming a safety cell body structure, which preferably surrounds the whole vehicle (1).

## Patentansprüche

1. Verbindungsanordnung (40) zum lösbaren Verbinden eines ersten (9) und eines zweiten Abschnitts (11) einer Seitenaufprallsicherheitsstruktur (3) eines Fahrzeugs (1), wobei sich der erste Abschnitt (9) in einer ersten Tür (5) befindet ist und sich der zweite Abschnitt (11) in einer zweiten Tür (7) befindet, wobei sich die zweite Tür (7) in dem Fahrzeug (1) rückwärts von der ersten Tür (5) befindet,
wobei die Verbindungsanordnung (40) Folgendes umfasst:
- ein erstes Kopplungselement (57), dazu ausgelegt, an einer hinteren Kante (15) oder angrenzend an eine solche Kante der ersten Tür (5) angeordnet zu sein, die direkt oder indirekt an dem ersten Abschnitt (9) der Sicherheitsstruktur (3) angebracht ist,
- eine Scharnierwelle (65), die eine Drehachse (A1) zum Öffnen der zweiten Tür (7) ausbildet,
- ein Karosseriescharnierelement (61, 63) mit einem ersten Ende (61a), das dazu ausgelegt ist, an einer Karosserie (33) des Fahrzeugs (1) angebracht zu werden, und einem zweiten Ende (61b), das dazu ausgelegt ist, die Scharnierwelle (65) aufzunehmen, und
- ein zweites Kopplungselement (67), dazu ausgelegt, an einer vorderen Kante (23) oder angrenzend an eine vordere Kante (23) der zweiten Tür (7) angeordnet zu sein, die direkt oder indirekt an dem zweiten Abschnitt (11) der Sicherheitsstruktur (3) angebracht ist, wobei das zweite Kopplungselement (67) ferner dazu ausgelegt ist, an der Scharnierwelle (65) angebracht zu werden, sodass das zweite Kopplungselement (67) in der Lage ist, sich in Bezug auf das Karosseriescharnierelement (61, 63) zu drehen,
wobei das erste und zweite Kopplungselement (57, 67) lösbar miteinander verbindbar sind, sodass dann, wenn das erste und zweite Kopplungselement (57, 67) verbunden sind, eine Kraft in einer Längsrichtung (L) des Fahrzeugs (1) von einem von dem ersten und zweiten Kopplungselement (57, 67) auf das andere übertragbar ist, wobei das erste und zweite Kopplungselement (57, 67) ferner durch die Drehung des zweiten Kopplungselements (67) voneinander lösbar sind,
**dadurch gekennzeichnet, dass**
das zweite Kopplungselement (67) über die Scharnierwelle (65) an dem zweiten Abschnitt (11) der Sicherheitsstruktur (3) angebracht ist.

2. Verbindungsanordnung (40) nach Anspruch 1, wobei eines von dem ersten und zweiten Kopplungselement (57, 67) ein aufzunehmendes Element (67a-f) umfasst, und das andere von dem ersten und zweiten Kopplungselement (57, 67) ein aufnehmendes Element (57a-f) umfasst, das dazu ausgelegt ist, das aufzunehmende Element (67a-f) aufzunehmen.

3. Verbindungsanordnung (40) nach Anspruch 2, wobei eines von dem ersten und zweiten Kopplungselement (57, 67) eine Vielzahl von aufzunehmenden Elementen (67a-f) umfasst, und das andere von dem ersten und zweiten Kopplungselement (57, 67) eine Vielzahl von aufnehmenden Elementen (57a-f) umfasst, vorzugsweise in entsprechender Anzahl.

4. Verbindungsanordnung (40) nach einem der vorangehenden Ansprüche, wobei das Karosseriescharnierelement ein oberes Karosseriescharnierelement (61) ausbildet und die Verbindungsanordnung (40) ferner ein unteres Karosseriescharnierelement (63) umfasst, wobei sich die Scharnierwelle (65) zwischen dem oberen Karosseriescharnierelement (61) und dem unteren Karosseriescharnierelement (63) erstreckt, wobei das zweite Kopplungselement (67) drehbar an der Scharnierwelle (65) zwischen dem oberen Karosseriescharnierelement (61) und dem unteren Karosseriescharnierelement (63) angebracht ist.

5. Tür (5, 7) eines Fahrzeugs (1), wobei die Tür (5, 7) einen ersten (9) oder einen zweiten Abschnitt (11) einer Seitenaufprallsicherheitsstruktur (3) umfasst, und ein entsprechendes erstes (57) oder ein zweites Kopplungselement (67) der Verbindungsanordnung (40) nach einem der vorangehenden Ansprüche, wobei das Kopplungselement (57, 67) direkt oder indirekt an dem Abschnitt (9, 11) der Seitenaufprallsicherheitsstruktur (3) angebracht ist.

6. Tür (5, 7) nach Anspruch 5, ferner umfassend ein zusätzliches Kopplungselement (43) zum Verbinden der Tür (5, 7) mit einem Türschweller (55).

7. Seitenaufprallsicherheitsstruktur (3) eines Fahrzeugs (1), umfassend einen ersten Abschnitt (9), einen zweiten Abschnitt (11) und eine Verbindungsanordnung (40) nach einem der Ansprüche 1 bis 4 zum lösbaren Verbinden des ersten Abschnitts (9) und des zweiten Abschnitts (11) miteinander.

8. Seitenaufprallsicherheitsstruktur (3) nach Anspruch 7, wobei die Seitenaufprallsicherheitsstruktur (3) eine Breite (Width (w₁, w₂)) aufweist, die größer als 20 % einer Höhe (h₁, h₂) der niedrigsten von der ersten und der zweiten Tür (5, 7) ist, vorzugsweise größer als 30 %, und am meisten zu bevorzugen größer als 50 %, wobei die Höhe (h₁, h₂) von einer unteren Kante (17, 27) der Tür (5, 7) bis zu einer unteren Kante (19, 29) des Fensters gemessen wird.

9. Seitenaufprallsicherheitsstruktur (3) nach Anspruch 7 oder 8, wobei die Seitenaufprallsicherheitsstruktur (3) ferner eine Scharnieranordnung (35) an einer vorderen Kante (13) der ersten Tür (5), einen Sperrriegel (39) an einer hinteren Kante (25) der zweiten Tür (7) und/oder eine Verbindung (39) der hinteren Türsäule beinhaltet.

10. Seitenaufprallsicherheitsstruktur (3) nach einem der Ansprüche 7-9, wobei die Seitenaufprallsicherheitsstruktur (3) dazu ausgelegt ist, sich entlang einer Seite des Fahrzeugs (1) zu erstrecken und vorzugsweise eine Verlängerung aufweist, die länger als die gesamte Längsverlängerung (x₁+x₂) der ersten und zweiten Tür (5, 7) ist.

11. Seitenaufprallsicherheitsstruktur (3) nach einem der Ansprüche 7-10, wobei mindestens ein Abschnitt des ersten und zweiten Abschnittes (9, 11) der Seitenaufprallsicherheitsstruktur (3) mindestens teilweise durch ein äußeres Blech (34, 36) der ersten oder zweiten Tür (5, 7) ausgebildet ist.

12. Seitenaufprallsicherheitsstruktur (3) nach einem der Ansprüche 7-11, wobei der erste und/oder zweite Abschnitt (9, 11) der Seitenaufprallsicherheitsstruktur (3) eine Membran, ein Gitter (21, 31) oder einen Rahmen umfasst.

13. Fahrzeug (1), umfassend eine Verbindungsanordnung (40) nach einem der Ansprüche 1 bis 4 und/oder eine Tür (5, 7) nach Anspruch 5 oder 6 und/oder eine Seitenaufprallsicherheitsstruktur (3) nach einem der Ansprüche 7-12.

14. Fahrzeug (1) nach Anspruch 13, wobei das erste und zweite Kopplungselement (57, 67) mindestens 30 mm von einer seitlichen Kante des Fahrzeugs (1) befindlich sind, vorzugsweise weniger als 20 mm, stärker zu bevorzugen weniger als 10 mm und am stärksten zu bevorzugen weniger als 5 mm.

15. Fahrzeug (1) nach Anspruch 13 oder 14, wobei das Fahrzeug (1) eine Seitenaufprallsicherheitsstruktur (3) an jeder Seite des Fahrzeugs (1) umfasst, wobei die Seitenaufprallsicherheitsstrukturen (3) zusammen mit einer Karosserie (33) des Fahrzeugs (1) eine Sicherheitszellen-Karosseriestruktur ausbilden, die vorzugsweise das gesamte Fahrzeug (1) umgibt.

## Revendications

1. Système de raccordement (40) pour un raccordement libérable d'une première partie (9) et d'une seconde partie (11) d'une structure de sécurité latérale contre la collision (3) d'un véhicule (1), ladite première partie (9) étant située dans une première porte (5) et ladite seconde partie (11) étant située dans une seconde porte (7), ladite seconde porte (7) étant située à l'arrière de ladite première porte (5) dans ledit véhicule (1),
ledit système de raccordement (40) comprenant
- un premier élément de couplage (57) conçu pour être situé sur ou adjacent à un bord arrière (15) de ladite première porte (5), fixé directement ou indirectement à ladite première partie (9) de ladite structure de sécurité (3),
- un arbre articulé (65) formant un axe de rotation (A1) pour l'ouverture de ladite seconde porte (7),
- un élément d'articulation (61, 63) de carrosserie ayant une première extrémité (61a) conçue pour être fixée à une carrosserie (33) dudit véhicule (1) et une seconde extrémité (61b) conçue pour recevoir ledit arbre articulé (65), et
- un second élément de couplage (67), conçu pour être situé sur ou adjacent à un bord avant (23) de ladite seconde porte (7), fixé directement ou indirectement à ladite seconde partie (11) de ladite structure de sécurité (3), ledit second élément de couplage (67) étant en outre conçu pour être fixé audit arbre articulé (65), de sorte que ledit second élément de couplage (67) puisse tourner par rapport audit élément d'articulation (61, 63) de carrosserie,
lesdits premier et second éléments de couplage (57, 67) pouvant être raccordés de façon libérable l'un à l'autre, de sorte que lorsque lesdits premier et second éléments de couplage (57, 67) sont raccordés, une force dans une direction longitudinale (L) dudit véhicule (1) est transférable de l'un à l'autre desdits premier et second éléments de couplage (57, 67), lesdits premier et second éléments de couplage (57, 67) pouvant en outre être libérés l'un de l'autre par ladite rotation dudit second élément de couplage (67),
**caractérisé en ce que**
ledit second élément de couplage (67) est fixé à ladite seconde partie (11) de ladite structure de sécurité (3) par le biais dudit arbre articulé (65).

2. Système de raccordement (40) selon la revendication 1, dans lequel l'un desdits premier et second éléments de couplage (57, 67) comprend un organe mâle (67a-f) et l'autre desdits premier et second éléments de couplage (57, 67) comprend un organe femelle (57a-f) conçu pour recevoir ledit organe mâle (67a-f).

3. Système de raccordement (40) selon la revendication 2, dans lequel l'un desdits premier et second éléments de couplage (57, 67) comprend une pluralité d'organes mâles (67a-f) et l'autre desdits premier et second éléments de couplage (57, 67) comprend une pluralité d'organes femelles (57a-f), de préférence en un nombre correspondant.

4. Système de raccordement (40) selon l'une quelconque des revendications précédentes, dans lequel ledit élément d'articulation de carrosserie forme un élément d'articulation de carrosserie supérieur (61) et ledit système de raccordement (40) comprend en outre un élément d'articulation de carrosserie inférieur (63), ledit arbre articulé (65) s'étendant entre ledit élément d'articulation de carrosserie supérieur (61) et ledit élément d'articulation de carrosserie inférieur (63), ledit second élément de couplage (67) étant fixé en rotation audit arbre articulé (65) entre ledit élément d'articulation de carrosserie supérieur (61) et ledit élément d'articulation de carrosserie inférieur (63).

5. Porte (5, 7) d'un véhicule (1), ladite porte (5, 7) comprenant une première (9) ou une seconde (11) partie d'une structure de sécurité latérale contre la collision (3) et un premier (57) ou un second (67) élément de couplage correspondant du système de raccordement (40) selon l'une quelconque des revendications précédentes, ledit élément de couplage (57, 67) étant directement ou indirectement fixé à ladite partie (9, 11) de ladite structure de sécurité latérale contre la collision (3).

6. Porte (5, 7) selon la revendication 5, comprenant en outre un élément de couplage supplémentaire (43) pour le raccordement de ladite porte (5, 7) à un seuil de porte (55).

7. Structure de sécurité latérale contre la collision (3) d'un véhicule (1) comprenant une première partie (9), une seconde partie (11) et un système de raccordement (40) selon l'une quelconque des revendications 1 à 4 pour le raccordement libérable de ladite première partie (9) et de ladite seconde partie (11) l'une à l'autre.

8. Structure de sécurité latérale contre la collision (3) selon la revendication 7, dans laquelle ladite structure de sécurité latérale contre la collision (3) présente une largeur (w₁, w₂) qui est supérieure à 20 % d'une hauteur (h₁, h₂) de la plus basse desdites première et seconde portes (5, 7), de préférence supérieure à 30 %, et le plus préférablement supérieure à 50 %, ladite hauteur (h₁, h₂) étant mesurée entre un bord inférieur (17, 27) de ladite porte (5, 7) et un bord inférieur (19, 29) de la vitre.

9. Structure de sécurité latérale contre la collision (3) selon la revendication 7 ou 8, dans laquelle ladite structure de sécurité latérale contre la collision (3) comprend en outre un système d'articulation (35) sur un bord avant (13) de ladite première porte (5), un verrou de blocage (39) sur un côté arrière (25) de ladite seconde porte (7) et/ou un raccordement de montant de porte arrière (39).

10. Structure de sécurité latérale contre la collision (3) selon l'une quelconque des revendications 7 à 9, dans laquelle ladite structure de sécurité latérale contre la collision (3) est conçue pour s'étendre le long d'un côté dudit véhicule (1), de préférence ayant une extension qui est plus longue que l'extension longitudinale totale (x₁ + x₂) desdites première et seconde portes (5, 7).

11. Structure de sécurité latérale contre la collision (3) selon l'une quelconque des revendications 7 à 10, dans laquelle au moins une partie desdites première et seconde parties (9, 11) de ladite structure de sécurité latérale contre la collision (3) est au moins en partie formée par un panneau extérieur (34, 36) desdites première et seconde portes (5, 7).

12. Structure de sécurité latérale contre la collision (3) selon l'une quelconque des revendications 7 à 11, dans laquelle ladite première et/ou ladite seconde partie (9, 11) de ladite structure de sécurité latérale contre la collision (3) comprend une membrane, un treillis (21, 31) ou un cadre.

13. Véhicule (1) comprenant un système de raccordement (40) selon l'une quelconque des revendications 1 à 4 et/ou une porte (5, 7) selon la revendication 5 ou 6 et/ou une structure de sécurité latérale contre la collision (3) selon l'une quelconque des revendications 7 à 12.

14. Véhicule (1) selon la revendication 13, dans lequel lesdits premier et second éléments de couplage (57, 67) sont situés à moins de 30 mm d'un bord latéral dudit véhicule (1), de préférence à moins de 20 mm, plus préférablement à moins de 10 mm et le plus préférablement à moins de 5 mm.

15. Véhicule (1) selon la revendication 13 ou 14, dans lequel ledit véhicule (1) comprend une structure de sécurité latérale contre la collision (3) sur chaque côté dudit véhicule (1), lesdites structures de sécurité latérales contre la collision (3), conjointement avec une carrosserie (33) dudit véhicule (1), formant une structure de carrosserie de cellule de sécurité qui entoure de préférence la totalité du véhicule (1).
